(19)

**Europäisches Patentamt**
**European Patent Office**
**Office européen des brevets**

(11)  **EP 4 580 137 A1**

(12)  # EUROPEAN PATENT APPLICATION
published in accordance with Art. 153(4) EPC

(43)  Date of publication:
**02.07.2025   Bulletin 2025/27**

(21)  Application number: **22956134.5**

(22)  Date of filing: **26.08.2022**

(51)  International Patent Classification (IPC):
**H04L 27/26** (2006.01)

(52)  Cooperative Patent Classification (CPC):
**H04L 27/2628; H04L 27/26; H04L 27/26025;**
**H04W 52/0225**

(86)  International application number:
**PCT/CN2022/115208**

(87)  International publication number:
**WO 2024/040589 (29.02.2024 Gazette 2024/09)**

(84)  Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71)  Applicant: **GUANGDONG OPPO MOBILE**
**TELECOMMUNICATIONS**
**CORP., LTD.**
**Dongguan, Guangdong 523860 (CN)**

(72)  Inventors:
• **HE, Chuanfeng**
  **Dongguan, Guangdong 523860 (CN)**
• **XU, Weijie**
  **Dongguan, Guangdong 523860 (CN)**

(74)  Representative: **Grassi, Stefano**
  **Bugnion S.p.A.**
  **Viale Lancetti, 17**
  **20158 Milano (IT)**

(54)  ## WIRELESS COMMUNICATION METHOD AND DEVICE

(57)  Embodiments of the present application provide a wireless communication method and a device. A carrier signal generated on the basis of multi-carrier modulation is introduced, a carrier signal and an energy supply signal for zero-power-consumption communication can be supported in a multi-carrier system, the complexity of a transmitter introduced for supporting zero-power-consumption communication is reduced, and the compatibility with other devices can also be kept. The wireless communication method comprises: a first communica- tion device receives a carrier signal generated on the basis of multi-carrier modulation, wherein the carrier signal is used for energy supply for the first communica- tion device, and/or the carrier signal is used for the first communication device to generate a backscattered sig- nal by means of modulation.

**200**

First communication device

Second communication device

S210, the second communication device transmits a carrier signal generated based on multi-carrier modulation; wherein the carrier signal is used for power supply to the first communication device, and/or the carrier signal is used for the first communication device to generate a backscatter signal by modulation

S220, the first communication device receives the carrier signal

**FIG. 11**

**Description**

TECHNICAL FIELD

Embodiments of the present disclosure relate to the field of communication, and more particularly, to a method for wireless communication and a device.

BACKGROUND

At present, a zero-power device transmits data by means of backscatter. A backscatter-dependent carrier signal is generally a narrowband signal, such as a sine wave. However, such carrier signal cannot better comply with the requirements for the communication based on the zero-power device.

SUMMARY

The embodiments of the present disclosure provide a method for wireless communication and a device, which introduces a carrier signal generated based on multi-carrier modulation and may support the carrier signal and a power supply signal for zero-power communication in a multi-carrier system, such that complexity of a transmitter introduced to support zero-power communication is reduced, and compatibility with other devices may also be maintained.

In a first aspect, there is provided a method for wireless communication. The method includes following operation.

A first communication device receives a carrier signal generated based on multi-carrier modulation.

The carrier signal is used for power supply to the first communication device, and/or the carrier signal is used for the first communication device to generate a backscatter signal by modulation.

In a second aspect, there is provided a method for wireless communication. The method includes following operation.

A second communication device transmits a carrier signal generated based on multi-carrier modulation.

The carrier signal is used for power supply to a first communication device, and/or the carrier signal is used for the first communication device to generate a backscatter signal by modulation.

In a third aspect, there is provided a communication device configured to perform the method in the first aspect described above.

Specifically, the communication device includes a functional module configured to perform the method in the first aspect described above.

In a fourth aspect, there is provided a communication device configured to perform the method in the second aspect described above.

Specifically, the communication device includes a functional module configured to perform the method in the second aspect described above.

In a fifth aspect, there is provided a communication device. The communication device includes a processor and a memory. The memory is configured to store a computer program, and the processor is configured to call and run the computer program stored in the memory to enable the communication device to perform the above-mentioned method in the first aspect.

In a sixth aspect, there is provided a communication device. The communication device includes a processor and a memory. The memory is configured to store a computer program, and the processor is configured to call and run the computer program stored in the memory to enable the communication device to perform the above-mentioned method in the second aspect.

In a seventh aspect, there is provided an apparatus for implementing the method of any one of the first aspect to the second aspect described above.

Specifically, the apparatus includes a processor. The processor is configured to call and run a computer program from a memory to enable a device installed with the apparatus to perform the method of any one of the first aspect to the second aspect described above.

In an eighth aspect, there is provided a computer-readable storage medium for storing a computer program. The computer program causes a computer to perform the method of any one of the first aspect to the second aspect described above.

In a ninth aspect, there is provided a computer program product including computer program instructions that cause a computer to perform the method of any one of the first aspect to the second aspect described above.

In a tenth aspect, there is provided a computer program. The computer program, when run on a computer, causes the computer to perform the method of any one of the first aspect to the second aspect described above.

Based on the above technical solutions, a carrier signal generated based on multi-carrier modulation is introduced, the carrier signal and the power supply signal for zero-power communication may be supported in a multi-carrier system, such that the complexity of the transmitter introduced for supporting the zero-power communication is reduced, and the compatibility with other devices may also be maintained.

BRIEF DESCRIPTION OF THE DRAWINGS

FIG. 1 is a schematic diagram of a communication system architecture to which an embodiment of the present disclosure is applied.

FIG. 2 is a diagram of a receiver system based on zero-power wake-up according to the present disclosure.

FIG. 3 is a schematic diagram of a wake-up radio physical layer protocol data unit (WUR PPDU) frame according to the present disclosure.

FIG. 4 is a schematic diagram of a WUR synchronization sequence On-Off Keying (OOK) modulation according to the present disclosure.

FIG. 5 is a schematic diagram of a WUR data OOK modulation according to the present disclosure.

FIG. 6 is a schematic diagram of a Multi-carrier (MC)-OOK signal generated through multi-carrier modulation according to the present disclosure.

FIG. 7 is a schematic diagram of a zero-power communication according to the present disclosure.

FIG. 8 is a schematic diagram of back scattering according to the present disclosure.

FIG. 9 is a schematic diagram of power harvesting according to the present disclosure.

FIG. 10 is a schematic diagram of a circuit for resistance load modulation according to the present disclosure.

FIG. 11 is a schematic flowchart of a method for wireless communication according to an embodiment of the present disclosure.

FIG. 12 is a flowchart of generating a carrier signal based on multi-carrier modulation according to an embodiment of the present disclosure.

FIG. 13 is a schematic diagram of an equally-spaced subcarrier pattern according to an embodiment of the present disclosure.

FIG. 14 is a schematic diagram of a carrier signal according to an embodiment of the present disclosure.

FIG. 15 is a schematic diagram of a backscatter signal according to an embodiment of the present disclosure.

FIG. 16 is a schematic diagram of another carrier signal according to an embodiment of the present disclosure.

FIG. 17 is a schematic diagram of another backscatter signal according to an embodiment of the present disclosure.

FIG. 18 is a schematic diagram of subcarriers associated with a carrier signal and subcarriers associated with a backscatter signal according to an embodiment of the present disclosure.

FIG. 19 is a schematic diagram of the subcarriers associated with another carrier signal and the subcarriers associated with another backscatter signal according to an embodiment of the present disclosure.

FIG. 20 is a schematic block diagram of a communication device according to an embodiment of the present disclosure.

FIG. 21 is a schematic block diagram of another communication device according to an embodiment of the present disclosure.

FIG. 22 is a schematic block diagram of another communication device according to an embodiment of the present disclosure.

FIG. 23 is a schematic block diagram of an apparatus according to an embodiment of the present disclosure.

FIG. 24 is a schematic block diagram of a communication system according to an embodiment of the present disclosure.

DETAILED DESCRIPTION

The technical solutions of the embodiments of the present disclosure will be described below with reference to the accompanying drawings in the embodiments of the present disclosure. It is apparent that the described embodiments are part of the embodiments of the present disclosure, rather than all embodiments of the disclosure. All other embodiments obtained by those of ordinary skill in the art based on the embodiments in the disclosure without creative work shall fall within the scope of protection of the disclosure.

The technical solutions of the embodiments of the present disclosure may be applied to various communication systems, for example, a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an Advanced long term evolution (LTE-A) system, a New Radio (NR) system, an evolution system of a NR system, a LTE-based access to unlicensed spectrum (LTE-U) system, a NR-based access to unlicensed spectrum (NR-U) system, a Non-Terrestrial Networks (NTN) system, a Universal Mobile Telecommunication System (UMTS), a Wireless Local Area Network (WLAN), internet of things (IoT), Wireless Fidelity (WiFi), a fifth-generation communication (5G) system, a sixth-generation communication (6G) system, or other communication systems, etc.

In general, conventional communication systems support a limited number of connections and are easy to implement. However, with the development of communication technologies, mobile communication systems will not only support conventional communication, but also support, for example, device to device (D2D) communication, machine to machine (M2M) communication, machine type communication (MTC), vehicle to vehicle (V2V) communication, sidelink (SL) communication, Vehicle to everything (V2X) communication, etc. The embodiments of the present disclosure can also be applied to these communication systems.

In some embodiments, the communication system in the embodiments of the present disclosure may be applied to a Carrier Aggregation (CA) scenario, and may also be applied to a Dual Connectivity (DC) scenario, a Standalone (SA) network layout scenario, or a Non-Standalone (NSA) network layout scenario.

In some embodiments, the communication system in the embodiments of the present disclosure may be applied to an unlicensed spectrum. The unlicensed spectrum may also be regarded as a shared spectrum. Alternatively, the communication system in the embodiments of the present disclosure may also be applied to a licensed spectrum, and the licensed spectrum may also be regarded as a non-shared spectrum.

In some embodiments, the communication system in the embodiments of the present disclosure may be applied to the FR1 frequency band (corresponding to the frequency band range of 410 MHz to 7.125 GHz), the FR2 frequency band (corresponding to the frequency band range of 24.25 GHz to 52.6 GHz), and also applied to a new frequency band, such as the high frequency band corresponding to the frequency band range of 52.6 GHz to 71 GHz or the frequency band range of 71 GHz to 114.25 GHz.

Various embodiments are described in the embodiments of the present disclosure in combination with the network device and the terminal device. The terminal device may also be referred to as a User Equipment (UE), an access terminal, a subscriber unit, a subscriber station, a mobile station, a mobile radio station, a remote station, a remote terminal, a mobile device, a user terminal, a terminal, a wireless communication device, a user agent, or a user device, or the like.

The terminal device may be a station (ST) in the WLAN, or may be a cell phone, a cordless phone, a Session Initiation Protocol (SIP) phone, a Wireless Local Loop (WLL) ST, a Personal Digital Assistant (PDA) device, a handheld device with a wireless communication function, a computing device, another processing device connected to a wireless modem, a vehicle-mounted device, a wearable device, a terminal device in a next-generation communication system, for example, an NR network, a terminal device in a future evolved Public Land Mobile Network (PLMN), or the like.

In the present disclosure, the terminal device may be deployed on land, including indoor or outdoor, handheld, wearable or onboard, or may be deployed on the water surface (such as a ship), or may be deployed in the air (such as an airplane, a balloon or a satellite)).

In the embodiments of the present disclosure, the terminal device may be a Mobile Phone, a Pad, a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home, a vehicle-mounted communication device, a wireless communication chip/application specific integrated circuit (ASIC)/System on Chip (SoC), or the like.

As an example rather than restriction, in the embodiments of the present disclosure, the terminal device may also be a wearable device. The wearable device, also referred to as a wearable intelligent device, is a generic term of wearable devices obtained by performing intelligent design and development on daily wearing products by using the wearable technology, such as glasses, gloves, watches, clothes, and shoes. The wearable device is a portable device directly worn or integrated to clothes or accessory of a user. The wearable device not only is a hardware device but also realizes powerful functions by software support, data interaction, and cloud interaction. Generalized wearable intelligent devices include full-featured, large size and complete or partial functions realized without relying on smart phones, such as smart watches or smart glasses, and includes only a certain application function, which is necessary to be used in conjunction with other devices such as a smart phone, such as various smart bracelets for monitoring physical signs, or smart jewelry and the like.

In the embodiments of the present disclosure, the network device may be a device configured to communicate with a mobile device. The network device may be an Access Point (AP) in the WLAN, a Base Transceiver Station (BTS) in the GSM or CDMA, or may be a NodeB (NB) in WCDMA, or may be an Evolutional Node B (eNB or eNodeB) in LTE, or a relay ST or AP, or a vehicle-mounted device, a wearable device, a network device or a gNB or a Transmission Reception Point (TRP) in an NR network, or a network device in the future evolved PLMN network or a network device in the NTN network, or the like.

As an example rather than restriction, in the embodiments of the present disclosure, the network device may have mobile characteristics. For example, the network device may be a mobile device. In some embodiments, the network device may be a satellite or a balloon ST. For example, a satellite may be a low earth orbit (LEO) satellite, a medium earth orbit (MEO) satellite, a geostationary earth orbit (GEO) satellite, a High Elliptical Orbit (HEO) satellite, or the like. In some embodiments, the network device may also be a base station installed on the land, in the water, or the like.

In the embodiments of the present disclosure, the network device may provide service for a cell, and the terminal device communicates with the network device through a transmission resource (for example, a frequency-domain resource or a spectrum resource) for the cell. The cell may be a cell corresponding to the network device (for example, a base station). The cell may belong to a macro base station or a base station corresponding to a small cell. The small cell may include: a metro cell, a micro cell, a pico cell, a femto cell and the like. These small cells have the characteristics of small coverage and low transmitted power and are suitable for providing high-rate data transmission services.

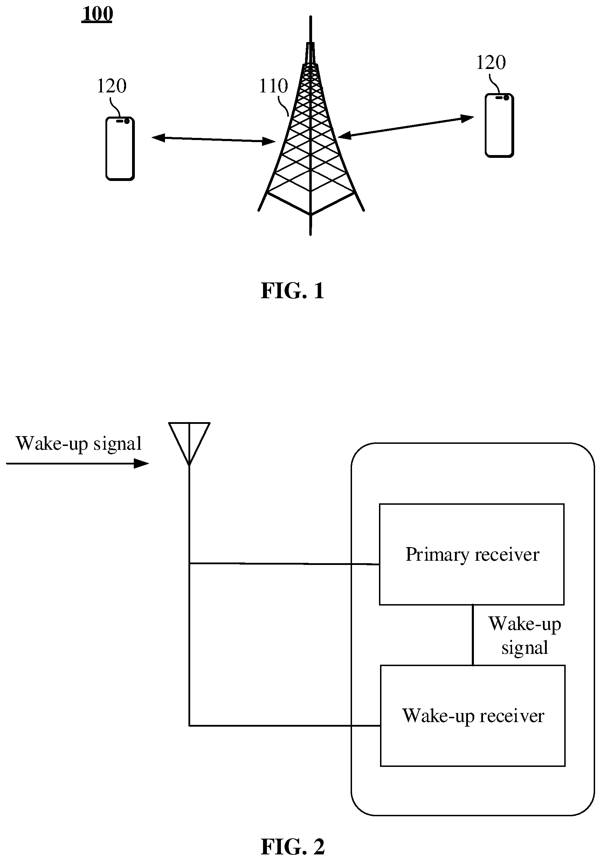

Exemplarily, the communication system 100 to which the embodiments of the present disclosure are applied is illustrated in FIG. 1. The communication system 100 may include a network device 110. The network device 110 may be a device that communicates with a terminal device 120 (or referred to as a communication terminal or terminal). The network device 110 may provide communication coverage for a particular geographic area and may communicate with terminal devices located within the coverage area.

FIG. 1 exemplarily illustrates one network device and two terminal devices. In some embodiments, the communication system 100 may include a plurality of network devices, and other numbers of terminal devices may be included within the coverage of each network device, which is not limited in the embodiments of the present disclosure.

In some embodiments, the communication system 100 may also include other network entities, such as a network controller, a mobility management entity, or the like, which is not limited in the embodiments of the present disclosure.

It is to be understood that a device with the communication function in a network/system in the embodiments of the present disclosure may be referred to as a communication device. Taking the communication system 100 illustrated in FIG. 1 as an example, the communication device may include a network device 110 and a terminal device 120 with the communication function. The network device 110 and the terminal device 120 may be specific devices described above and will not be elaborated herein. The communication device may also include other devices in the communication system 100, such as a network controller, a mobility management entity, and other network entities, which is not limited in the embodiments of the present disclosure.

It is to be understood that the terms "system" and "network" in the present disclosure are often used interchangeably herein. The term "and/or" is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship.

It is to be understood that a first communication device and a second communication device are involved in the present disclosure. The first communication device may be a terminal device, such as a cell phone, a machine facility, a Customer Premise Equipment (CPE), an industrial device, a vehicle, or the like. The second communication device may be a peer communication device of the first communication device, such as a network device, a mobile phone, an industrial device, a vehicle, or the like. In the embodiments of the present disclosure, the first communication device may be a terminal device, and the second communication device may be a network device (i.e., uplink communication or downlink communication). Alternatively, the first communication device may be a first terminal, and the second communication device may be a second terminal (i.e., sideline communication).

The terminologies used in the implementations of the present disclosure are for the purpose of explanation of specific embodiments of the present disclosure only, and are not intended to limit the present disclosure. The terms "first", "second", "third", "fourth" and the like in the specification, claims and the accompanying drawings of the disclosure are used to distinguish different objects and are not used to describe a particular order. Furthermore, the terms "comprising" and "including", as well as any variations thereof, are intended to cover non-exclusive inclusions.

It is to be understood that the term "indication" mentioned in the embodiments of the present disclosure may be direct indication, or indirect indication, or indicate that there is an association relationship. For example, A indicating B may indicate that A directly indicates B, for example, B may be acquired through A, or indicate that A indirectly indicates B, for example, A indicates C, and B may be acquired through C, or indicate that there is an association relationship between A and B.

In the description of the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured.

In the embodiments of the present disclosure, "predefined" or "preconfigured" may be implemented by storing the corresponding codes, tables, or other manners for indicating relevant information in advance in the device (including, for example, the terminal device and the network device), and the specific implementations thereof are not limited in the present disclosure. For example, "predefined" may refer to refer to those defined in a protocol.

In the embodiments of the present disclosure, the "protocol" may refer to a standard protocol in the field of communication, for example, an evolution of the existing LTE protocol, NR protocol, Wi-Fi protocol, or the protocol related to other communication systems related thereto, and the protocol type is not limited in the present disclosure.

In order to facilitate the understanding of the technical solutions of the embodiments of the present disclosure, the technical solutions of the present disclosure will be described in detail below with reference to specific embodiments. The following related technologies may be arbitrarily combined with the technical solutions in the embodiments of the present disclosure as optional solutions, and all of them belong to the scope of protection of the embodiments of the present disclosure. The embodiments of the present disclosure include at least part of the following contents.

In order to facilitate a better understanding of the embodiments of the present disclosure, power saving of a terminal based on a wake up receiver related to the present disclosure will be described.

In order to further save power of UE, a wake up receiver is involved to receive a wake up signal (WUS). The wake up receiver has the characteristics of ultra-low cost, ultra-low complexity and ultra-low power consumption, which mainly receives the wake up signal (WUS) based on envelope detection. Therefore, the modulation manner and the waveform of the WUS received by the wake up receiver are different from the modulation manner and the waveform of the signal carried based on the Physical Downlink Control Channel (PDCCH). The wake up signal is mainly an envelope signal by performing Amplitude Shift Keying (ASK) modulation on the carrier signal. The demodulation of the envelope signal is also mainly completed by driving a low power circuit based on the power provided by the wireless radio frequency signal, thus it can be passive. The wake up receiver may also be powered by the terminal. Regardless of the power supply manner, the wake up receiver greatly reduces the power consumption compared with the traditional receiver of UE. The wake-up receiver may be combined with the UE as an additional module of the UE receiver, or may be used as a separate wake up function module of the UE.

FIG. 2 illustrates a block diagram of a receiver system based on zero-power wake-up. The wake up receiver receives a wake-up signal, and if the UE is required to turn on the receiver, the UE may be instructed to turn on the primary receiver. Otherwise, the primary receiver of the UE may be in an off state.

In order to facilitate a better understanding of the embodiments of the present disclosure, a wake up signal in the Wi-Fi communication related to the present disclosure will be described.

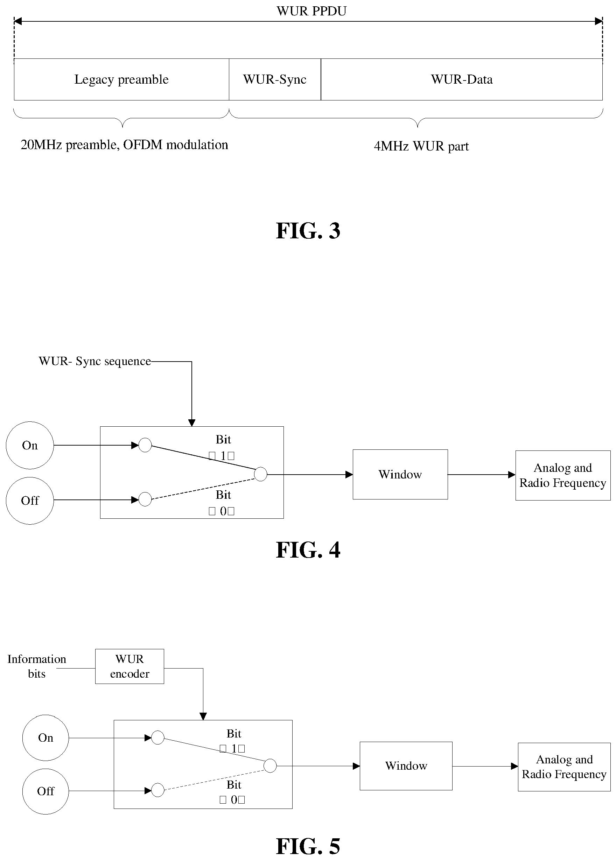

In the Wi-Fi communication, the wake-up radio (WUR) signal is used to implement power saving of the device. The WUR Access point (AP) notifies the WUR station (STA) of the power-saving operation through a WUR wake-up frame. The wake-up frame is carried in a WUR physical layer protocol data unit (PPDU) frame. One WUR PPDU frame includes three parts: a legacy preamble, a WUR-Sync and a WUR-Data. The legacy preamble is used for protecting the WUR-Sync and the WUR-Data, and is a non-WUR part reserved for compatibility consideration. The legacy preamble uses the conventional Orthogonal Frequency-Division Multiplexing (OFDM) modulation and the bandwidth of 20MHz. The WUR-Sync is used for identifying and demodulating the WUR-Data part, and the WUR-Data part is used for carrying a WUR physical layer service data unit (PSDU), as illustrated in FIG. 3.

The WUR-Sync part and the WUR-Data part use On-Off Keying (OOK) modulation and 4MHz. The modulation principle of OOK is to modulate the amplitude of the carrier signal to a non-zero value and a zero value, which correspond to On and Off, respectively, and are used to represent information bits. OOK is also known as binary amplitude keying (2ASK). As illustrated in FIG. 4, the WUR-Sync part carries a synchronization sequence that is repeated twice. In the sequence, bit 1 is modulated to On and bit 0 is modulated to Off.

The synchronization sequence uses a predefined sequence W including 32 bits, and different sequences indicate data rates used by different WUR-data parts.

The synchronization sequence corresponding to WUR low data rate (LDR) is as follows:

$$W = [1\ 0\ 1\ 0\ 0\ 1\ 0\ 0\ 1\ 0\ 1\ 1\ 1\ 0\ 1\ 1\ 0\ 0\ 0\ 1\ 0\ 1\ 1\ 1\ 0\ 0\ 1\ 1\ 1\ 0\ 0\ 0]$$

The synchronization sequence corresponding to WUR high data rate (HDR) is as follows:

$$W = [0\ 1\ 0\ 1\ 1\ 0\ 1\ 1\ 0\ 1\ 0\ 0\ 0\ 1\ 0\ 0\ 1\ 1\ 1\ 0\ 1\ 0\ 0\ 0\ 1\ 1\ 0\ 0\ 0\ 1\ 1\ 1]$$

Each bit in the WUR-Sync part is mapped by the OOK modulation into an MC-OOK symbol with a length of 2 μs.

The WUR-data part carries user information. The user information is encoded and modulated by using the OOK modulation to form the MC-OOK symbol with corresponding length, as illustrated in FIG. 5.

The MC-OOK symbol length corresponding to the WUR LDR is 4μs and the MC-OOK symbol length corresponding to the WUR HDR is 2μs.

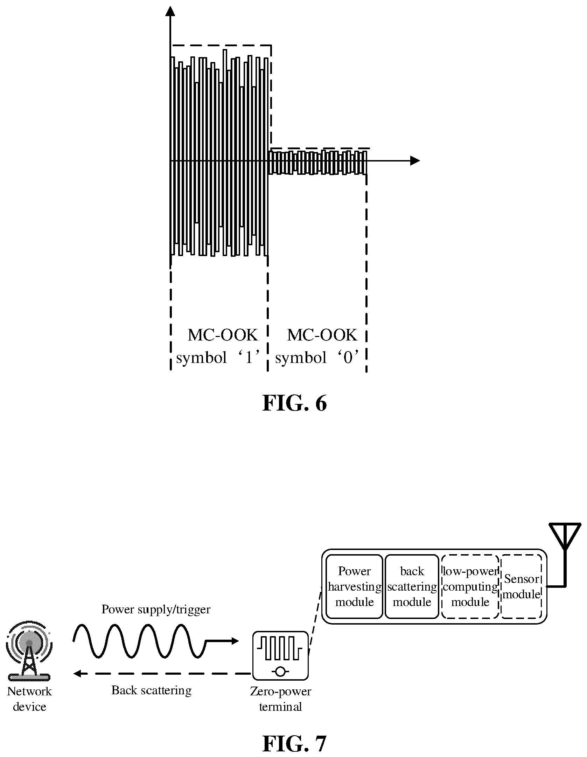

It is to be noted that the above-mentioned OOK signal is generated through a Multi-carrier (MC), thus the OOK signal is referred to as an MC-OOK signal. The generation of MC-OOK signal may be that the multi-carrier modulation, such as OFDM modulation, is used to generate the OOK signal, such that a good compatibility with the OFDM system may be maintained and the complexity of the transmitter introduced by implementing the WUR signal may be reduced. FIG. 6 is a schematic diagram of an MC-OOK signal generated by multi-carrier modulation. The corresponding amplitude values are mapped on a plurality of subcarriers in the frequency domain, and the waveform of the signal transformed into the time domain through the Inverse Discrete Fourier Transform (IDFT) approximates the waveform formed through the ASK modulation, where bit 1 is represented by a high level of the signal and bit 0 is represented by a low level of the signal.

In order to facilitate a better understanding of the embodiments of the present disclosure, a zero-power device related to the present disclosure will be described.

In recent years, zero-power devices have been used more and more widely. A typical zero-power device is the Radio Frequency Identification (RFID), which is a technology that uses spatial coupling of wireless radio frequency signals to implement the contactless automatic transmission and identification of the tag information. The RFID tag is also referred to as a "radio frequency tag" or "electronic tag". The electronic tags may be divided according to different power supply modes into active electronic tags, passive electronic tags and semi-passive electronic tags. The active electronic tag, also known as an active tag, means that working power of the electronic tag is provided by battery, and the battery, memory and antenna together form the active electronic tag. Different from the passive radio frequency activation mode, the active electronic tag transmits information through the set frequency band before battery replacement. The passive electronic tag, also known as a passive tag, does not support a built-in battery. When the passive electronic tag approaches a reader/writer, an antenna of the electronic tag generates an induced current through electromagnetic induction if the tag is in the near field range formed by the radiation of an antenna of the reader/writer, and the induced current drives a chip circuit of the electronic tag. The chip circuit transmits the identification information stored in the tag to the reader/writer through the antenna of the electronic tag. The semi-passive electronic tag, also known as a semi-active electronic tag, inherits the advantages of small size, light weight, low price and long service life of the passive electronic tag. The built-in battery of the semi-passive electronic tag only provides power for a few circuits in the chip when there is no access of the reader/writer, and only when the reader/writer accesses, the built-in battery supplies power to the RFID chip, so as to increase the reading and writing distance of the tag and improve the reliability of communication.

RFID is a wireless communication technology. The most basic RFID system is composed of two parts: an electronic tag (TAG) and a Reader/Writer. The electronic tag is composed of coupling components and chips, and each electronic tag has a unique electronic code, which is placed on the measured target to mark the target object. The Reader/Writer can not only read information on the electronic tag, but also write information on the electronic tag, and meanwhile provide the power required for communication of the electronic tag. As illustrated in FIG. 7, after the electronic tag enters the electromagnetic field, the electronic tag receives a radio frequency signal sent by the reader/writer, the passive electronic tag or passive tag uses the power obtained from the electromagnetic field generated in space to transmit information stored in the electronic tag, and the reader/writer reads and decodes the information to identify the electronic tag.

The key technology for zero-power communication includes power harvesting, back scattering, and low-power computing. As illustrated in FIG. 7, a typical zero-power communication system includes a reader/writer and a zero-power terminal. The reader/writer emits the radio wave for providing power to the zero-power terminal. The power harvesting module installed in the zero-power terminal may harvest the power carried by the radio wave in the space (the radio wave emitted by the reader/writer illustrated in FIG. 7) to drive the low-power computing module of the zero-power terminal and implement the back scattering. After the zero-power terminal obtains the power, the zero-power terminal may receive the control command of the reader/writer and transmits data to the reader/writer in a backscattering manner based on the control command. The transmitted data may be from data stored in the zero-power terminal itself (for example, identification or pre-written information, such as a production date, brand and manufacturer of a commodity). The zero-power terminal may also include various sensors, so as to report data collected by various sensors based on the zero-power mechanism.

In order to facilitate a better understanding of the embodiments of the present disclosure, the back scattering related to the present disclosure will be described.

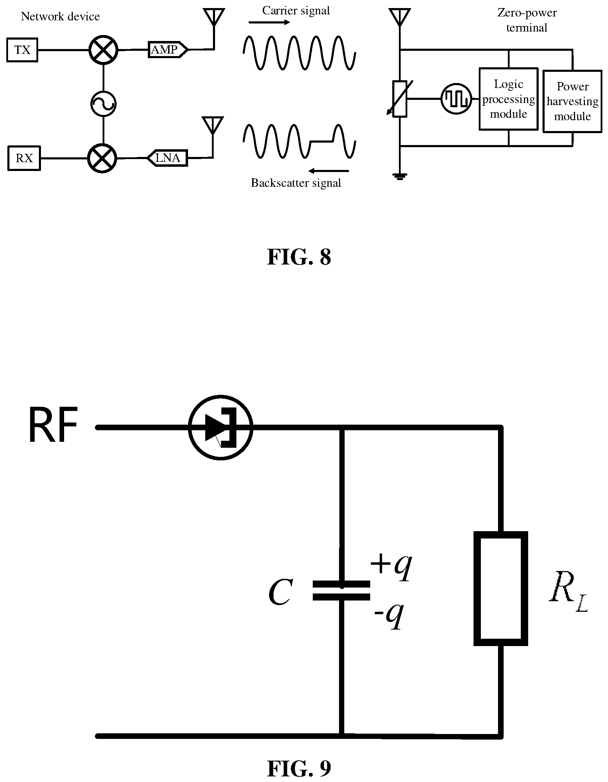

As illustrated in FIG. 8, the zero-power device (the backscatter tag in FIG. 8) receives the carrier signal sent by the backscatter reader/writer and collects energy through the Radio Frequency (RF) power harvesting module. Further, the low-power processing module (the logic processing module in FIG. 8) functions to modulate and backscatter the carrier signal.

The main features of back scattering are as follows.

(1) The terminal does not actively transmit signals, and implements the back scattering by modulating incoming signals.
(2) The terminal does not rely on a conventional active power amplifier transmitter, and uses a low-power computing unit, which greatly reduces the complexity of hardware.
(3) Battery-free communication is realized by combining power harvesting.

In order to facilitate a better understanding of the embodiments of the present disclosure, the RF power harvesting related to the present disclosure will be described.

As illustrated in FIG. 9, a RF module is used to harvest the space electromagnetic wave power through the electromagnetic induction, to drive the load circuit (low-power computing, sensor, etc.), such that the battery-free may be implemented.

In order to facilitate a better understanding of the embodiments of the present disclosure, load modulation related to the present disclosure will be described.

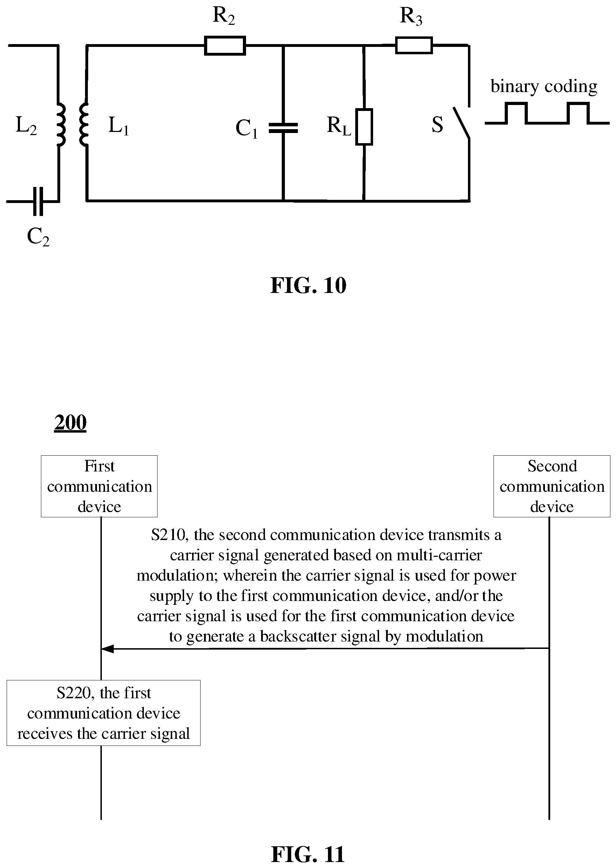

The load modulation is a manner generally used by the electronic tag to transmit data to the reader/writer. The load modulation adjusts electrical parameters of the oscillation circuit of the electronic tag according to the beat of the data stream, to enable the magnitude and phase of the impedance of the electronic tag to change accordingly, thereby completing the modulation process. The load modulation technology mainly includes resistive load modulation and capacitive load modulation. In the resistive load modulation, a load is connected in parallel with a resistor, which is referred to as a load modulation resistor. The resistor is turned on and off according to the clock of the data stream, and the on and off of the switch S is controlled by binary data coding. The circuit schematic diagram of the resistive load modulation is illustrated in FIG. 10.

In the capacitive load modulation, a load is connected in parallel with a capacitor, which replaces the load modulation resistor controlled by the binary coding in FIG. 10.

In order to facilitate a better understanding of the embodiments of the present disclosure, the coding technology related to the present disclosure will be described.

The data transmitted by the electronic tag may use different forms of codes to represent the binary "1" and "0". A radio frequency identification system typically uses one of the following coding manners: reverse non-return-to-zero (NRZ) coding, Manchester coding, Unipolar return-to-zero (RZ) coding, differential bi-phase (DBP) coding, Miller coding, or differential coding. More generally, different pulse signals are used to represent 0 and 1.

In order to facilitate a better understanding of the embodiments of the present disclosure, a power supply signal in the zero-power system related to the present disclosure will be described.

In terms of the carrier for the power supply signal, the carrier may be a base station, a smartphone, a smart gateway, a charging station, a micro base station, etc.

In terms of the frequency band, the radio wave used for power supply may be in low frequency, intermediate frequency, high frequency, etc.

In terms of the waveform, the radio wave used for power supply may be a sine wave, a square wave, a triangular wave, a pulse, a rectangular wave, etc. Furthermore, the radio wave used for power supply may be a continuous wave or a discontinuous wave (i.e. allowing interruption for a certain duration).

The power supply signal may be a signal specified in The 3rd Generation Partnership Project (3GPP) standard, for example, a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), or the like.

In order to facilitate a better understanding of the embodiments of the present disclosure, a trigger signal in the zero-power system related to the present disclosure will be described.

In terms of the carrier of the trigger signal, the carrier may be a base station, a smartphone, a smart gateway, etc.

In terms of the frequency band, the radio wave used for triggering may be in low frequency, intermediate frequency, high frequency, etc.

In terms of the waveform, the radio wave used for trigger may be a sine wave, a square wave, a triangular wave, a pulse, a rectangular wave, etc. Furthermore, the radio wave used for triggering may be a continuous wave or a discontinuous wave (i.e. allowing interruption for a certain duration).

The trigger signal may be a signal specified in the 3GPP standard, for example, an SRS, PUSCH, PRACH, PUCCH, PDCCH, PDSCH, PBCH, etc. The trigger signal may also be a new signal.

In order to facilitate a better understanding of the embodiments of the present disclosure, the cellular passive Internet of Things related to the present disclosure will be described.

With the increase of 5G industry applications, there are more and more application scenarios and types of connected objects, and there will be higher requirements for the price and power consumption of communication terminals. The application of battery-free and low-cost passive IoT devices has become the key technology of cellular Internet of Things, which enriches the types and quantities of 5G network link terminals, and truly implements the Internet of Everything. The passive IoT device may be based on the existing zero-power device, such as RFID technology, and extended on this basis to be suitable for the cellular IoT.

In order to facilitate a better understanding of the embodiments of the present disclosure, the problem solved by the present disclosure will be described.

At present, a zero-power device (such as RFID) transmits data through backscatter. The backscatter-dependent carrier signal is normally a narrowband signal, such as a sine wave. This kind of carrier signal has two disadvantages. On the one hand, such carrier signal is not compatible with the transmitter (such as OFDM transmitter) in the multi-carrier modulation, and has obvious disadvantages in the complexity of transmitter and the compatibility with other devices. On the other hand, in the unlicensed spectrum, for a device that uses a channel with a certain bandwidth to send the signal, there is a certain limit on the signal transmission power per unit bandwidth. If a narrowband signal is used to send the carrier signal, the transmission power of the carrier signal is also limited by the bandwidth, which will be relatively small, and cannot meet the requirements of zero-power device for the signal power threshold for power harvesting, and thus the communication with the zero-power device may not be implemented.

Based on the above problems, the present disclosure proposes a scheme for generating a carrier signal by multi-carrier modulation. A carrier signal generated based on the multi-carrier modulation is introduced, the carrier signal and the power supply signal for the zero-power communication may be supported in a multi-carrier system, such that the complexity of the transmitter introduced for supporting zero-power communication is reduced, and the compatibility with other devices may also be maintained.

The technical solutions of the present disclosure will be described in detail with reference to specific embodiments.

FIG. 11 is a schematic flowchart of a method 200 for wireless communication according to an embodiment of the present disclosure. As illustrated in FIG. 11, the method 200 for wireless communication may include at least part of the following contents.

At S210, a second communication device transmits a carrier signal generated based on multi-carrier modulation. The carrier signal is used for power supply to a first communication device, and/or the carrier signal is used for the first communication device to generate a backscatter signal by modulation.

At S220, the first communication device receives the carrier signal.

In the embodiments of the present disclosure, the carrier signal generated based on multi-carrier modulation is introduced, the carrier signal is used for power supply to the first communication device, and/or the carrier signal is used for the first communication device to generate a backscatter signal by modulation. The carrier signal and the power supply signal for zero-power communication can be supported in the multi-carrier system, such that the complexity of the transmitter introduced for supporting the zero-power communication is reduced, and the compatibility with other devices can be maintained.

In the embodiments of the present disclosure, the "backscatter signal" may also be referred to as a "reflecting signal" or a "reflected signal", which is not limited in the present disclosure.

In the embodiments of the present disclosure, the carrier signal is used for power supply to the first communication device. That is, the carrier signal may be a power supply signal of the first communication device.

In some embodiments, the first communication device may be a zero-power device. In an embodiment, the first communication device may obtain power through power harvesting for communication, information collection and processing. That is, before the second communication device communicates with the first communication device, it is necessary to ensure that the first communication device receives the radio wave for wireless power supply and obtains wireless power through the power harvesting. That is, the embodiments of the present disclosure can be applied to zero-power communication technologies.

It is to be understood that the present disclosure does not limit a specific manner in which the first communication device obtains power through the power harvesting. By way of example and not limitation, the first communication device may obtain power through the wireless energy supply manner, such as wireless radio frequency signal, solar energy, pressure or temperature.

It is to be noted that the zero-power device is a generalized name for a device with ultra-low complexity and ultra-low power consumption. Such device may not rely on the battery, the power required for the operation of the device comes from the environment, and the device may have the capability of power harvesting and power storage. The communication of zero-power device only supports simple modulation and demodulation manners, such as Amplitude Shift Keying (ASK)/Frequency Shift Keying (FSK), etc. Specifically, the zero-power device may refer to an Ambient Power Enabled (AMP) device introduced in the 3GPP and Wi-Fi technology (such as 802.11 technical standard), or may be a communication module of an existing device, such as a WUR function module introduced in 802.11ba technology and a Wake up receiver of the terminal device introduced in the 3GPP.

Specifically, the power of AMP devices comes from the environment. Depending on the type of AMP devices, some AMP devices may have an active emission capability rather than only relying on backscatter. Therefore, the method of generating a carrier signal based on multi-carrier modulation in the present disclosure may also be used for generating a power supply signal, and the power supply signal is used for providing the AMP device with the power required for operation by means of a wireless radio frequency signal.

In some embodiments, the second communication device may generate the carrier signal based on multi-carrier modulation. Alternatively, the second communication device may acquire a carrier signal generated based on multi-carrier modulation from another device and transmit the carrier signal to the first communication device.

In some embodiments, the second communication device is a device for communicating with the first communication device. In an embodiment, the second communication device may be a network device, or the second communication device may be a terminal device, or the second communication device may be a power supply node.

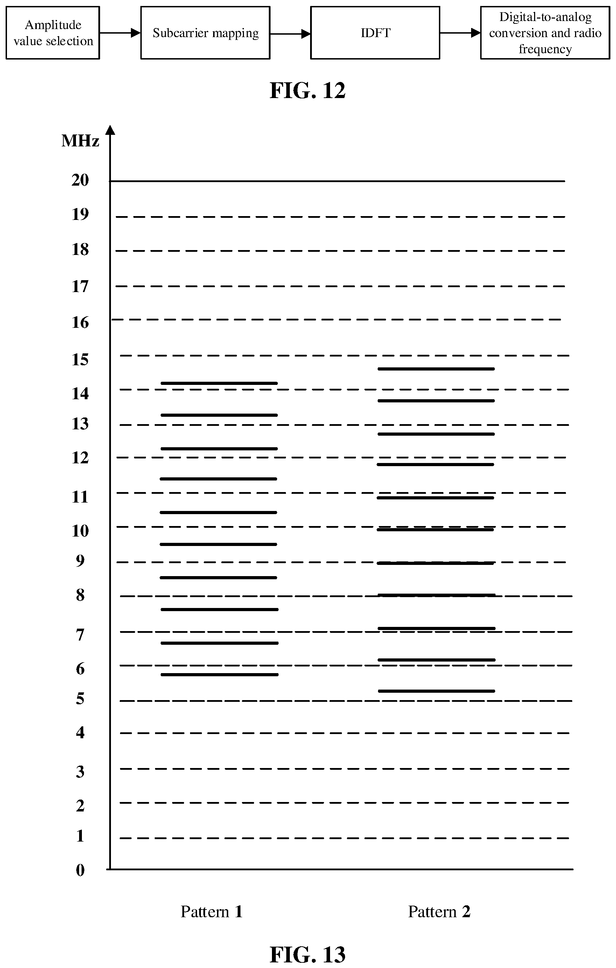

In some embodiments, the flow of generating a carrier signal based on multi-carrier modulation may be as illustrated in FIG. 12. First, one or more non-zero amplitude values need to be selected, then the selected non-zero amplitude values are mapped to a plurality of subcarriers and IDFT transformation is performed, and finally, the digital-to-analog conversion and radio frequency are performed to obtain the carrier signal.

In some embodiments, in the multi-carrier modulation, the carrier signal is obtained based on modulation of a plurality of subcarriers set with one or more non-zero amplitude values.

In some embodiments, the non-zero amplitude values associated with the plurality of subcarriers may be the same or different.

In some embodiments, the non-zero amplitude value is agreed by a protocol, or configured by a network.

In some embodiments, the non-zero amplitude value is one of:

an amplitude value associated with Binary Phase Shift Keying (BPSK), an amplitude value associated with Quadrature Phase Shift Keying (QPSK), an amplitude value associated with 16-Quadrature Amplitude Modulation (QAM), an amplitude value associated with 64-QAM, or an amplitude value associated with 256-QAM.

In some embodiments, the plurality of subcarriers are arranged at equal intervals, or the plurality of subcarriers are arranged at non-equal intervals.

Specifically, in selecting the subcarriers for generating the carrier signal, in addition to considering the interval between the subcarriers, the number of subcarriers or the bandwidth range spanned by the subcarriers should also be considered. In an unlicensed spectrum, there is an upper limit requirement on the transmission power and the signal power spectral density of the device, such that the spectrum can be equitable between the devices. For example, for a 2.4 GHz unlicensed spectrum, it is required that the power spectral density of the device does not exceed 10 dBm/MHz. For example, for a 20MHz bandwidth, the maximum power of the device may be 23 dBm. For another example, at a 2.4 GHz spectrum, the maximum transmission power of the device is less than 23 dBm.

It is to be noted that, for transmission of the carrier signal, it is desirable to use the maximum transmission power of the device as much as possible to implement the maximum coverage range that can be achieved. Considering the limitation of the signal power spectral density, the distribution of the plurality of carriers that generate the carrier signal in frequency domain should ensure that there are one or more subcarriers per MHz range (the scale of power spectral density is in unit of MHz), and the power spectral density can reach the upper limit, such as 10 dBm/MHz. Taking the maximum power of the device being 20 dBm as an example, the subcarriers generating the carrier signal need to be distributed within the bandwidth range of at least 10 MHz, and it may be ensured that one or more subcarriers are present in each MHz. If the bandwidth is less than 10 MHz, the maximum transmission power of the device cannot be used. Assuming that the maximum transmission power of the device is P, in order to transmit the carrier signal using the power P, the relationship between the signal bandwidth W and P needs to meet: $P = 10\log(10mw * W)$, where the unit of P is dBm and the unit of W is MHz.

In some embodiments, the method of generating the power supply signal and the method of generating the carrier signal may be different. The requirement of generating the power supply signal may be lower than that of generating the carrier signal, however, interference still needs to be considered, while the requirement of amplitude characteristic may be reduced, and the power requirement (bandwidth) may not be reduced in order to achieve the coverage. From the perspective of implementation complexity, the two signals are generated by using the same method, and the complexity is low.

In some embodiments, the plurality of subcarriers are selected according to a target subcarrier pattern.

The target subcarrier pattern is agreed by a protocol, or configured by a network.

For example, taking the Wi-Fi technology at 2.4 GHz as an example, the subcarrier spacing used by OFDM is 312.5 kHz, and there are 3 subcarriers within 1 MHz range. If subcarriers with a larger interval are selected to generate the carrier signal when selecting the subcarriers, it is necessary to ensure that there is at least one subcarrier for generating the carrier signal in each MHz. For example, for selection of equally-spaced subcarriers, the interval between the selected subcarriers cannot exceed 1 MHz. For selection of non-equally spaced subcarriers, a certain subcarrier pattern needs to be determined to meet the above requirement that there is at least one subcarrier in each MHz. The specific pattern may be predefined or configured by the network. As illustrated in FIG. 13, taking the equally-spaced subcarriers as an example, the selected subcarrier spacing is 312.5 kHz*3, and the bandwidth is 10 MHz. In order to ensure that there is at least one subcarrier per MHz, pattern 1 requires 10 subcarriers, and pattern 2 requires 11 subcarriers. Specifically, the number of subcarriers included in the pattern may be different according to positions of the selected subcarriers.

In an embodiment, for the selection of non-equally spaced subcarrier, a certain number of subcarriers and their corresponding positions may be selected in each 1 MHz in units of MHz.

In order to implement transmission with the maximum transmission power of the device, the upper limit of the maximum transmission power of the device and power spectral density are needed to be considered for the selection of subcarriers, so as to determine the bandwidth occupied by the carrier signal that can be transmitted by using the maximum transmission power, the spacing between the subcarriers, and the distribution of subcarriers within the bandwidth. In the practical application, the bandwidth of the signal, the spacing between subcarriers, the transmission power of the device may be flexibly selected based on different coverage scenarios.

In some embodiments, the plurality of subcarriers are determined based on at least one of: the transmission power of the device generating the carrier signal (e.g., a maximum transmission power), the signal power spectral density (the signal power spectral density per MHz that needs to be met, which affects the distribution of subcarriers), the target transmission power of the carrier signal (the power required to transmit the carrier signal), or the bandwidth capability of the first communication device.

It is to be noted that the carrier does not necessarily need to transmit at full power or at a power close to the maximum transmit power (in pursuit of large coverage), but may also use a lower power to pursue a smaller coverage, which will involve a target transmit power of the carrier signal.

In the embodiments of the present disclosure, the bandwidth processing capability of the first communication device to perform backscattering is also a factor to be considered. The bandwidth that the first communication device performs backscattering on the carrier signal has a certain range, and the bandwidth of the carrier signal cannot exceed the bandwidth capability requirement that the first communication device performs backscattering.

In some embodiments, the carrier signal may be an OOK signal generated by multi-carrier modulation. Taking the OOK signal generated by OFDM modulation as an example, non-zero amplitude values are set for a plurality of subcarriers, and after the IDFT transformation of the transmitter, the corresponding On time-domain waveform may be generated; and if the corresponding subcarriers are not set with values, the corresponding off time-domain waveform may be generated, thereby implementing generation of the OOK signal based on the multi-carrier modulation. For example, a WUR signal in 802.11ba technology uses 13 subcarriers centered at a 64-point IDFT to generate the on waveform in a bandwidth of 20 MHz. For a symbol length of 2 $\mu$s, 6 subcarriers in the 13 subcarriers with subcarrier indexes k = (6, 4, 2, 2, 4, 6) are set with non-zero values (i.e., set with non-zero amplitude values), and other subcarriers are not set with values. For a symbol length of 4 $\mu$s, 12 subcarriers in the 13 subcarriers with subcarrier indexes k = (6, 5, ... 1, 1, 2, ... 6) are set with non-zero values (i.e., set with non-zero amplitude values), and other subcarriers are not set with values. In the present disclosure, the manner of generating the carrier signal may refer to the WUR signal, and the description thereof will not be elaborated herein.

In some embodiments, the carrier signal is used for the first communication device to generate a backscatter signal by modulation, that is, the first communication device carries information by modulating the carrier signal. The modulation manner is, for example, ASK modulation, thus the carrier signal generally has a relatively constant amplitude, and the first communication device forms the backscatter ASK signal by performing amplitude modulation on the carrier signal.

In a multi-carrier system, a preferred method is to generate a carrier signal through multi-carriers, for example, the Wi-Fi technology and NR technology by using the OFDM modulation. The on waveform generated by the OFDM modulation has a certain relatively flat amplitude, which can meet the requirements of being a carrier signal, and on this basis, the first communication device may modulate its amplitude by load modulation to form the ASK backscatter signal. Therefore, in the embodiments of the present disclosure, the carrier signal is generated by setting a group of subcarriers within the bandwidth with corresponding non-zero values and performing IDFT.

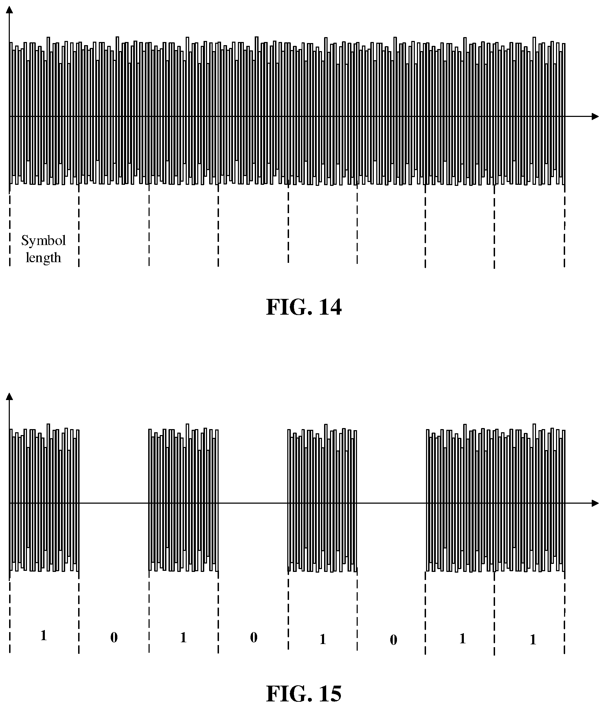

In some embodiments, as illustrated in FIG. 14, a group of subcarriers with a spacing is selected, set with non-zero values, and processed by the IDFT, to generate the consecutive on symbols, and this signal is a carrier signal with a flat amplitude in time domain. Correspondingly, the first communication device performs ASK modulation on the carrier signal to form a backscatter signal, as illustrated in FIG. 15, the information bits 10101011 are carried through the ASK modulation.

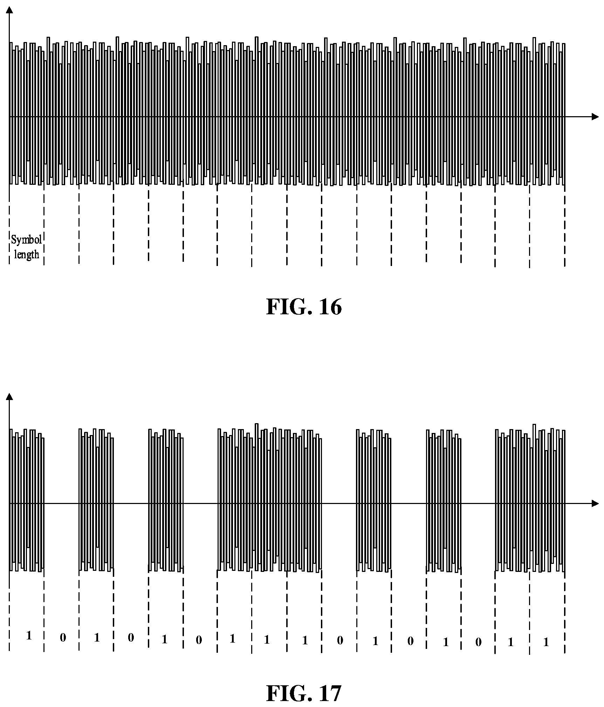

In some embodiments, the length of the generated on symbol varies depending on the spacing of the non-zero subcarriers. As illustrated in FIG. 16, it is possible to have a shorter symbol length by adjusting the spacing of the non-zero subcarriers. Correspondingly, the first communication device performs ASK modulation on the carrier signal to form a backscatter signal, as illustrated in FIG. 17, the information bits 1010101110101011 are carried through the ASK modulation.

In some embodiments, the symbol length associated with the carrier signal is same as the symbol length associated with the backscatter signal, as illustrated in FIG. 14 to FIG. 17.

In some embodiments, the symbol length associated with the carrier signal is different from the symbol length associated with the backscatter signal. Specifically, the symbol length associated with the backscatter signal may not depend on the symbol length for generating the carrier signal. That is, the symbol length of the backscatter signal may be different from the symbol length for generating the carrier signal. In an embodiment, the first communication device may determine a symbol length associated with the backscatter signal based on the data rate of the first communication device, and perform ASK modulation on the carrier signal to form an ASK symbol.

In some embodiments, subcarriers associated with the carrier signal and subcarriers associated with the backscatter signal do not overlap in frequency domain. Alternatively, an area in which the subcarrier associated with the carrier signal and the subcarrier associated with the backscatter signal overlap in the frequency domain is less than a preset value.

It is to be noted that if the carrier signal and the backscatter signal have the same frequency domain resources, it may cause strong interference to the reception of the backscatter signal. In addition, it is difficult to achieve alignment of different subcarriers, thus overlapping may occur. In this case, the overlapping area of the subcarriers associated with the carrier signal and the subcarriers associated with the backscatter signal in frequency domain may be set to be less than a preset value.

Specifically, the subcarriers associated with the carrier signal may be the subcarriers used for generating the carrier signal, and the subcarriers associated with the backscatter signal may be the subcarriers used for generating the backscatter signal.

In some embodiments, the preset value is agreed by a protocol, or the preset value is configured by a network, or the preset value is determined by the first communication device, or the preset value is determined by a device that generates the carrier signal.

In some embodiments, the number of subcarriers associated with the backscatter signal may be independent of the number of subcarriers associated with the carrier signal, or the number of subcarriers associated with the backscatter signal may be related to the number of subcarriers associated with the carrier signal.

For example, the number of subcarriers associated with the backscatter signal is less than the number of subcarriers associated with the carrier signal.

For another example, the number of subcarriers associated with the backscatter signal is greater than the number of subcarriers associated with the carrier signal.

For another example, the number of subcarriers associated with the backscatter signal is equal to the number of subcarriers associated with the carrier signal.

Therefore, in the embodiments of the present disclosure, the subcarriers associated with the carrier signal and the subcarriers associated with the backscatter signal do not overlap in the frequency domain, or an area in which the subcarrier associated with the carrier signal and the subcarrier associated with the backscatter signal overlap in the frequency domain is less than a preset value, such that the interference caused by the subcarriers associated with the carrier signal on the reception of the backscatter signal can be reduced.

In some embodiments, the subcarriers associated with the backscatter signal are obtained by shifting part or all of the subcarriers associated with the carrier signal in the frequency domain.

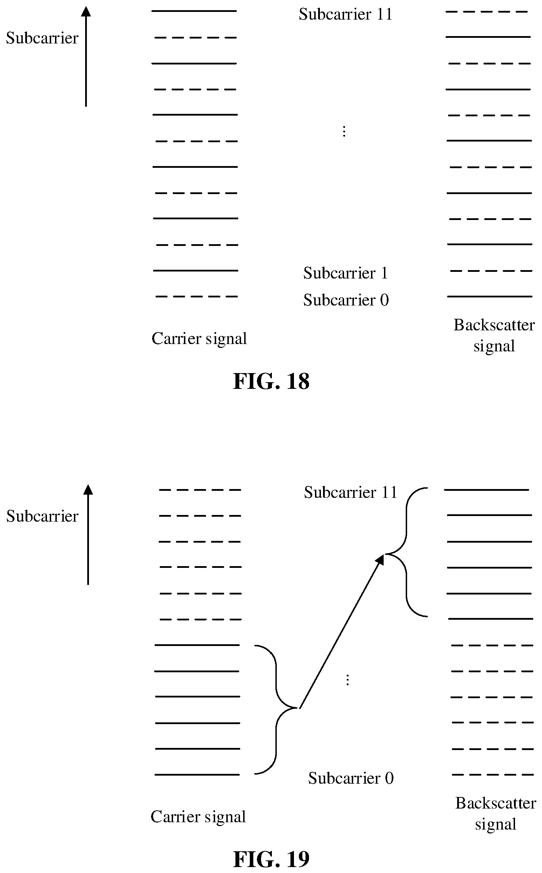

In some embodiments, the non-zero subcarriers used to generate the carrier signal are selected at an equal spacing within the channel bandwidth, and a subcarrier between adjacent non-zero subcarriers is not set with a value, or is set with a value of 0, i.e., null subcarrier. Accordingly, the first communication device, when performing backscattering, performs shifting in the frequency domain, such that the non-zero subcarrier is shifted to the null subcarrier of the carrier signal. As illustrated in FIG. 18, the non-zero subcarriers of the carrier signal are subcarriers 1, 3, 5, 7, 9, 11; the backscatter signal produces an offset of one subcarrier, and the non-zero subcarriers are subcarriers 0, 2, 4, 6, 8, 10.

In some embodiments, the embodiment illustrated in FIG. 18 requires a high frequency-domain synchronization capability of the first communication device, and if the backscatter signal cannot achieve a more accurate frequency domain offset of integer multiples of the subcarrier (i.e., integer multiples of the frequency domain raster, and the frequency domain raster with a complete offset is beneficial to the alignment and is not easy to be interfered), the interference between the subcarriers will also occur. Accordingly, another method is that the first communication device shifts the subcarriers associated with the carrier signal as a whole in the frequency domain during backscattering, such that the set of subcarriers associated with the carrier signal and the set of subcarriers associated with the backscatter signal are isolated in the frequency domain. As illustrated in FIG. 19, the set of subcarriers associated with the carrier signal is subcarriers 0-5, and the first communication device performs a relatively large frequency-domain shift during backscattering, such as shifting to subcarriers 6-11, that is, the set of subcarriers associated with the backscatter signal is subcarriers 6-11. This method may further reduce the interference. Meanwhile, if no other signals are used in the frequency domain range where the backscatter signal of the first communication device is located, the frequency domain synchronization capability of the first communication device may be relaxed to a certain extent, and the frequency domain offset is not strictly required to be an integer multiple of the subcarrier, and the backscatter signal may be received by the receiving end without being interfered by other signals.

In some embodiments, an offset in the frequency domain is agreed by a protocol, or the offset in the frequency domain is configured by a network, or the offset in the frequency domain is determined by the first communication device, or the offset in the frequency domain is determined by the device generating the carrier signal. In this case, capability requirements for the first communication device are small.

In some embodiments, an offset in the frequency domain is determined based on a capability of the first communication device.

In some embodiments, the offset in the frequency domain may include the range and accuracy of the frequency domain offset.

Accordingly, in the embodiments of the present disclosure, a carrier signal generated based on multi-carrier modulation is introduced, the carrier signal is used for power supply to the first communication device, and/or the carrier signal is used for the first communication device to generate a backscatter signal by modulation. The carrier signal and the power supply signal for zero-power communication may be supported in the multi-carrier system, such that the complexity of the transmitter introduced for supporting the zero-power communication may be reduced, and the compatibility with other devices may be maintained.

Further, the subcarriers associated with the carrier signal and the subcarriers associated with the backscatter signal do not overlap in the frequency domain, or an area in which the subcarrier associated with the carrier signal and the subcarrier associated with the backscatter signal overlap in the frequency domain is less than a preset value, such that the interference caused by the subcarrier associated with the carrier signal on the reception of the backscatter signal may be reduced.

Further, in the embodiments of the present disclosure, the multi-carrier selection manner may allow to fully use the transmission power of the device while the signal satisfies the limitation of the power spectral density, and the frequency diversity gain may also be achieved by using the multi-carrier.

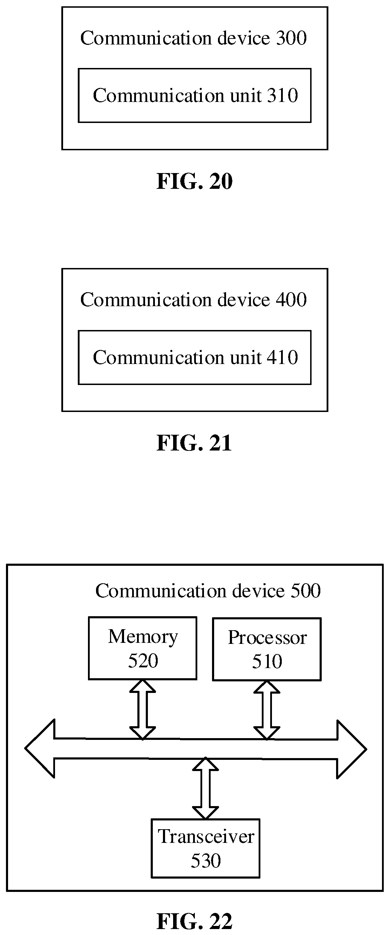

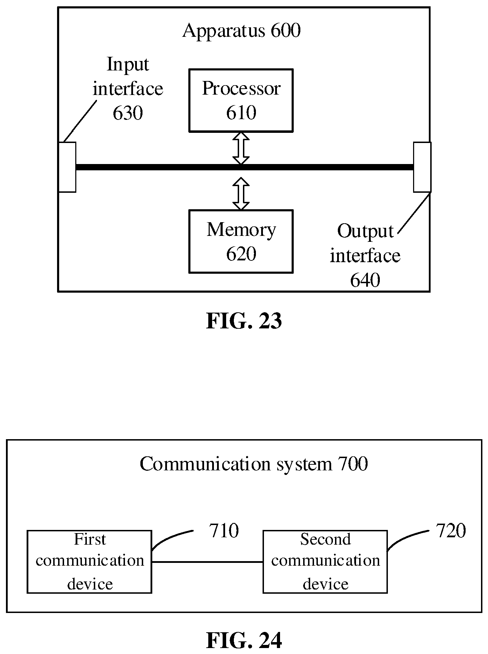

The method embodiments of the present disclosure are described in detail above with reference to FIG. 11 to FIG. 19. The device embodiments of the present disclosure are described in detail below with reference to FIG. 20 and FIG. 24. It is to be understood that the device embodiments correspond the method embodiments, and similar descriptions may be made with reference to the method embodiments.

FIG. 20 illustrates a schematic block diagram of a communication device 300 according to an embodiment of the present disclosure. The communication device 300 is a first communication device, and as illustrated in FIG. 20, the communication device 300 includes a communication unit 310.

The communication unit 310 is configured to receive a carrier signal generated based on multi-carrier modulation.

The carrier signal is used for power supply to the first communication device, and/or the carrier signal is used for the first communication device to generate a backscatter signal by modulation.

In some embodiments, subcarriers associated with the carrier signal and subcarriers associated with the backscatter signal do not overlap in the frequency domain. Alternatively, an area in which the subcarrier associated with the carrier signal and the subcarrier associated with the backscatter signal overlap in the frequency domain is less than a preset value.

In some embodiments, the subcarriers associated with the backscatter signal are obtained by shifting part or all of the subcarriers associated with the carrier signal in the frequency domain.

In some embodiments, an offset in the frequency domain is agreed by a protocol, or the offset in the frequency domain is configured by a network, or the offset in the frequency domain is determined by the first communication device, or the offset in the frequency domain is determined by a device generating the carrier signal.

In some embodiments, an offset in the frequency domain is determined based on a capability of the first communication device.

In some embodiments, a symbol length associated with the carrier signal is same as a symbol length associated with the backscatter signal, or the symbol length associated with the carrier signal is different from the symbol length associated with the backscatter signal.

In some embodiments, in the multi-carrier modulation, the carrier signal is obtained based on modulation of a plurality of subcarriers with a non-zero amplitude value.

In some embodiments, the non-zero amplitude value is agreed by a protocol, or the non-zero amplitude value is configured by a network.

In some embodiments, the non-zero amplitude value is one of: an amplitude value associated with Binary Phase Shift Keying (BPSK), an amplitude value associated with Quadrature Phase Shift Keying (QPSK), an amplitude value associated with 16-Quadrature Amplitude Modulation (QAM), an amplitude value associated with 64-QAM, or an amplitude value associated with 256-QAM.

In some embodiments, the plurality of subcarriers are arranged at equal intervals, or the plurality of subcarriers are arranged at non-equal intervals.

In some embodiments, the plurality of subcarriers are selected according to a target subcarrier pattern.

The target subcarrier pattern is agreed by a protocol, or the target subcarrier pattern is configured by a network.

In some embodiments, the plurality of subcarriers are determined based on at least one of: a transmission power of a device generating the carrier signal, a signal power spectral density, a target transmission power of the carrier signal, or a bandwidth capability of the first communication device.

In some embodiments, the above-mentioned communication unit may be a communication interface or a transceiver, or an input/output interface of a communication chip or a system-on-chip. The above-mentioned processing unit may be one or more processors.

It is to be understood that the communication device 300 according to the embodiments of the present disclosure may correspond to the first communication device in the method embodiments of the present disclosure, and the above-mentioned and other operations and/or functions of each unit of the terminal device 300 are for implementing the corresponding flow of the first communication device in the method 200 illustrated in FIG. 11, and will not be elaborated herein for the sake of brevity.

FIG. 21 illustrates a schematic block diagram of a communication device 400 according to an embodiment of the present disclosure. The communication device 400 is a second communication device, and as illustrated in FIG. 21, the communication device 400 includes a communication unit 410.

The communication unit 410 is configured to transmit a carrier signal generated based on multi-carrier modulation.

The carrier signal is used for power supply to a first communication device, and/or the carrier signal is used for the first communication device to generate a backscatter signal by modulation.

In some embodiments, subcarriers associated with the carrier signal and subcarriers associated with the backscatter signal do not overlap in the frequency domain. Alternatively, an area in which the subcarrier associated with the carrier signal and the subcarrier associated with the backscatter signal overlap in the frequency domain is less than a preset value.

In some embodiments, the subcarriers associated with the backscatter signal are obtained by shifting part or all of the subcarriers associated with the carrier signal in the frequency domain.

In some embodiments, an offset in the frequency domain is agreed by a protocol, or the offset in the frequency domain is configured by a network, or the offset in the frequency domain is determined by the first communication device, or the offset in the frequency domain is determined by a device generating the carrier signal.

In some embodiments, an offset in the frequency domain is determined based on a capability of the first communication device.

In some embodiments, a symbol length associated with the carrier signal is the same as a symbol length associated with the backscatter signal, or the symbol length associated with the carrier signal is different from the symbol length associated with the backscatter signal.

In some embodiments, in the multi-carrier modulation, the carrier signal is obtained based on modulation of a plurality of subcarriers set with a non-zero amplitude value.

In some embodiments, the non-zero amplitude value is agreed by a protocol, or the non-zero amplitude value is configured by a network.

In some embodiments, the non-zero amplitude value is one of: an amplitude value associated with Binary Phase Shift Keying (BPSK), an amplitude value associated with Quadrature Phase Shift Keying (QPSK), an amplitude value associated with 16-Quadrature Amplitude Modulation (QAM), an amplitude value associated with 64-QAM, or an amplitude value associated with 256-QAM.

In some embodiments, the plurality of subcarriers are arranged at equal intervals, or the plurality of subcarriers are arranged at non-equal intervals.

In some embodiments, the plurality of subcarriers are selected according to a target subcarrier pattern.

The target subcarrier pattern is agreed by a protocol, or the target subcarrier pattern is configured by a network.

In some embodiments, the plurality of subcarriers are determined based on at least one of: a transmission power of a device generating the carrier signal, a signal power spectral density, a target transmission power of the carrier signal, or a bandwidth capability of the first communication device.

In some embodiments, the above-mentioned communication unit may be a communication interface or a transceiver, or an input/output interface of a communication chip or a system-on-chip. The above-mentioned processing unit may be one or more processors.

It is to be understood that the communication device 400 according to the embodiments of the present disclosure may correspond to the second communication device in the method embodiments of the present disclosure, and the above-mentioned and other operations and/or functions of each unit of the communication device 400 are for implementing the corresponding flow of the second communication device in the method 200 illustrated in FIG. 11, and will not be elaborated herein for the sake of brevity.

FIG. 22 is a schematic structural diagram of a communication device 500 according to an embodiment of the present disclosure. The communication device 500 illustrated in FIG. 22 includes a processor 510, and the processor 510 may call and run a computer program from a memory to implement the method in the embodiments of the present disclosure.

In some embodiments, as illustrated in FIG. 22, the communication device 500 may further include a memory 520. The processor 510 may call and run a computer program from the memory 520 to implement the method in the embodiments of the disclosure.

The memory 520 may be a separate device independent of the processor 510, or the memory 520 may be integrated into the processor 510.

In some embodiments, as illustrated in FIG. 22, the communication device 500 may further include a transceiver 530. The processor 510 may control the transceiver 530 to communicate with other devices, particularly, to transmit information or data to other devices or receive information or data transmitted by other devices.

The transceiver 530 may include a transmitter and a receiver. The transceiver 530 may further include an antenna, and the number of the antennas may be one or more.

In some embodiments, the processor 510 may implement the functions of the processing unit of the communication device, which will not be elaborated herein for the sake of brevity.

In some embodiments, the transceiver 530 may implement the function of the communication unit of the communication device, which will not be elaborated herein for the sake of brevity.

In some embodiments, the communication device 500 may specifically be the communication device in the embodiments of the present disclosure, and the communication device 500 may implement the corresponding processes implemented by the first communication device in the methods of the embodiments of the disclosure, which is not elaborated herein for the sake of brevity.

In some embodiments, the communication device 500 may specifically be the communication device in the embodiments of the present disclosure, and the communication device 500 may implement the corresponding processes implemented by the second communication device in the methods of the embodiments of the disclosure, which is not elaborated herein for the sake of brevity.

FIG. 23 is a schematic structural diagram of an apparatus according to an embodiment of the present disclosure. The apparatus 600 illustrated in FIG. 23 includes a processor 610, and the processor 610 may call and run a computer programs from a memory to implement the method in the embodiments of the present disclosure.

In some embodiments, as illustrated in FIG. 23, the apparatus 600 may further include a memory 620. The processor 610 may call and run a computer program from the memory 620 to implement the method in the embodiments of the disclosure.

The memory 620 may be a separate device independent of the processor 610, or may be integrated into the processor 610.

In some embodiments, the apparatus 600 may further include an input interface 630. The processor 610 may control the input interface 630 to communicate with other devices or chips, and in particular may obtain information or data sent by other devices or chips. In an embodiment, the processor 610 may be located on-chip or off-chip.

In some embodiments, the processor 610 may implement the functions of the processing unit of the communication device, which will not be elaborated herein for the sake of brevity.

In some embodiments, the input interface 630 may implement the function of the communication unit of the communication device.

In some embodiments, the apparatus 600 may further include an output interface 640. The processor 610 may control the output interface 640 to communicate with other devices or chips, and in particular may output information or data to other devices or chips. In an embodiment, the processor 610 may be located on-chip or off-chip.

In some embodiments, the output interface 640 may implement the function of the communication unit of the communication device.

In some embodiments, the apparatus may be applied to the communication device in the embodiments of the present disclosure, and the apparatus may implement the corresponding processes implemented by the first communication device in the methods of the embodiments of the disclosure, which is not elaborated herein for the sake of brevity.

In some embodiments, the apparatus may be applied to the communication device in the embodiments of the present disclosure, and the apparatus may implement the corresponding processes implemented by the second communication device in the methods of the embodiments of the disclosure, which is not elaborated herein for the sake of brevity.

In some embodiments, the apparatus mentioned in the embodiments of the present disclosure may also be a chip, such as, a system-level chip, a system chip, a chip system, or a System on Chip (SOC) chip, etc.

FIG. 24 is a schematic block diagram of a communication system 700 according to an embodiment of the present disclosure. As illustrated in FIG. 24, the communication system 700 includes a first communication device 710 and a second communication device 720.

The first communication device 710 may be configured to implement the corresponding functions implemented by the first communication device in the above-mentioned methods, and the second communication device 720 may be configured to implement the corresponding functions implemented by the second communication device in the above-mentioned methods, which is not elaborated herein for the sake of brevity.

It is to be understood that the processor of the embodiments of the present disclosure may be an integrated circuit chip with a signal processing capability. During an implementation process, each operation in the above method embodiments may be completed via an integrated logic circuit of hardware in the processor or an instruction in a software form. The processor may be a universal processor, a Digital Signal Processor (DSP), an Application Specific Integrated Circuit (ASIC) and a Field Programmable Gate Array (FPGA) or other programmable logic devices, discrete gates or transistor logic devices, and discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the hardware decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

The embodiments of the present disclosure also provide a computer-readable storage medium for storing a computer program.

In some embodiments, the computer-readable storage medium may be applied to the communication device in the embodiments of the present disclosure, and the computer program enables a computer to execute the corresponding processes implemented by the first communication device in the various methods of the embodiments of the present disclosure. For the sake of brevity, it will not be elaborated herein.

In some embodiments, the computer-readable storage medium may be applied to the communication device in the embodiments of the present disclosure, and the computer program enables a computer to execute the corresponding processes implemented by the second communication device in the various methods of the embodiments of the present disclosure. For the sake of brevity, it will not be elaborated here.

The embodiments of the present disclosure also provide a computer program product, including a computer program instruction.

In some embodiments, the computer program product may be applied to the communication device in the embodiments of the present disclosure, and the computer program instruction enables a computer to execute the corresponding processes implemented by the first communication device in the various methods of the embodiments of the disclosure. For the sake of brevity, it will not be elaborated here.

In some embodiments, the computer program product may be applied to the communication device in the embodiments of the present disclosure, and the computer program instruction enables a computer to execute the corresponding processes implemented by the second communication device in the various methods of the embodiments of the present disclosure. For the sake of brevity, it will not be elaborated here.

The embodiment of the present disclosure also provides a computer program.

In some embodiments, the computer program may be applied to the communication device in the embodiments of the present disclosure, and the computer program, when run on a computer, enables the computer to execute the corresponding processes implemented by the first communication device in the various methods of the embodiments of the present disclosure. For the sake of brevity, it will not be elaborated here.

In some embodiments, the computer program may be applied to the communication device in the embodiments of the present disclosure, and the computer program, when run on a computer, enables the computer to execute the corresponding processes implemented by the second communication device in the various methods of the embodiments of the disclosure. For the sake of brevity, it will not be elaborated here.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

**Claims**

1. A method for wireless communication, comprising:

   receiving, by a first communication device, a carrier signal generated based on multi-carrier modulation;
   wherein the carrier signal is used for power supply to the first communication device, and/or the carrier signal is used for the first communication device to generate a backscatter signal by modulation.

2. The method of claim 1, wherein

   subcarriers associated with the carrier signal and subcarrier associated with the backscatter signal do not overlap in frequency domain; or
   an area in which the subcarriers associated with the carrier signal and the subcarriers associated with the backscatter signal overlap in the frequency domain is less than a preset value.

3. The method of claim 2, wherein the subcarriers associated with the backscatter signal is obtained by shifting part or all of the subcarriers associated with the carrier signal in the frequency domain.

4. The method of claim 3, wherein
   an offset in the frequency domain is agreed by a protocol, or the offset in the frequency domain is configured by a network, or the offset in the frequency domain is determined by the first communication device, or the offset in the frequency domain is determined by a device generating the carrier signal.

5. The method of claim 3, wherein an offset in the frequency domain is determined based on a capability of the first communication device.

6. The method of any one of claims 1 to 5, wherein
   a symbol length associated with the carrier signal is same as a symbol length associated with the backscatter signal, or
   the symbol length associated with the carrier signal is different from the symbol length associated with the backscatter signal.

7. The method of any one of claims 1 to 6, wherein
in the multi-carrier modulation, the carrier signal is obtained based on modulation of a plurality of subcarriers with a non-zero amplitude value.

8. The method of claim 7, wherein the non-zero amplitude value is agreed by a protocol, or the non-zero amplitude value is configured by a network.

9. The method of claim 7 or 8, wherein the non-zero amplitude value is one of:
an amplitude value associated with Binary Phase Shift Keying, BPSK, an amplitude value associated with Quadrature Phase Shift Keying, QPSK, an amplitude value associated with 16-Quadrature Amplitude Modulation, QAM, an amplitude value associated with 64-QAM, or an amplitude value associated with 256-QAM.

10. The method of any one of claims 7 to 9, wherein the plurality of subcarriers are arranged at equal intervals, or the plurality of subcarriers are arranged at non-equal intervals.

11. The method of claim 10, wherein the plurality of subcarriers are selected according to a target subcarrier pattern; wherein the target subcarrier pattern is agreed by a protocol, or the target subcarrier pattern is configured by a network.

12. The method of any one of claims 7 to 11, wherein the plurality of subcarriers is determined based on at least one of:
a transmission power of a device generating the carrier signal, a signal power spectral density, a target transmission power of the carrier signal, or a bandwidth capability of the first communication device.

13. A method for wireless communication, comprising:

transmitting, by a second communication device, a carrier signal generated based on multi-carrier modulation; wherein the carrier signal is used for power supply to a first communication device, and/or the carrier signal is used for the first communication device to generate a backscatter signal by modulation.

14. The method of claim 13, wherein

subcarriers associated with the carrier signal and subcarrier associated with the backscatter signal do not overlap in frequency domain; or
an area in which the subcarriers associated with the carrier signal and the subcarriers associated with the backscatter signal overlap in the frequency domain is less than a preset value.

15. The method of claim 14, wherein the subcarriers associated with the backscatter signal is obtained by shifting part or all of the subcarriers associated with the carrier signal in the frequency domain.

16. The method of claim 15, wherein
an offset in the frequency domain is agreed by a protocol, or the offset in the frequency domain is configured by a network, or the offset in the frequency domain is determined by the first communication device, or the offset in the frequency domain is determined by a device generating the carrier signal.

17. The method of claim 15, wherein an offset in the frequency domain is determined based on a capability of the first communication device.

18. The method of any one of claims 13 to 17, wherein
a symbol length associated with the carrier signal is same as a symbol length associated with the backscatter signal, or the symbol length associated with the carrier signal is different from the symbol length associated with the backscatter signal.

19. The method of any one of claims 13 to 18, wherein
in the multi-carrier modulation, the carrier signal is obtained based on modulation of a plurality of subcarriers with a non-zero amplitude value.

20. The method of claim 19, wherein the non-zero amplitude value is agreed by a protocol, or the non-zero amplitude value is configured by a network.

21. The method of claim 19 or 20, wherein the non-zero amplitude value is one of:
an amplitude value associated with Binary Phase Shift Keying, BPSK, an amplitude value associated with Quadrature Phase Shift Keying, QPSK, an amplitude value associated with 16-Quadrature Amplitude Modulation, QAM, an amplitude value associated with 64-QAM, or an amplitude value associated with 256-QAM.

22. The method of any one of claims 19 to 21, wherein the plurality of subcarriers are arranged at equal intervals, or the plurality of subcarriers are arranged at non-equal intervals.

23. The method of claim 22, wherein the plurality of subcarriers are selected according to a target subcarrier pattern; wherein the target subcarrier pattern is agreed by a protocol, or the target subcarrier pattern is configured by a network.

24. The method of any one of claims 19 to 23, wherein the plurality of subcarriers is determined based on at least one of: a transmission power of a device generating the carrier signal, a signal power spectral density, a target transmission power of the carrier signal, or a bandwidth capability of the first communication device.

25. A communication device, wherein the communication device is a first communication device, and the communication device comprises:

a communication unit, configured to receive a carrier signal generated based on multi-carrier modulation; wherein the carrier signal is used for power supply to the first communication device, and/or the carrier signal is used for the first communication device to generate a backscatter signal by modulation.

26. A communication device, wherein the communication device is a second communication device, and the communication device comprises:

a communication unit, configured to transmit a carrier signal generated based on multi-carrier modulation; wherein the carrier signal is used for power supply to a first communication device, and/or the carrier signal is used for the first communication device to generate a backscatter signal by modulation.

27. A communication device, comprising: a processor and a memory; wherein the memory is configured to store a computer program, and the processor is configured to call and run the computer program stored in the memory to enable the communication device to perform the method of any one of claims 1 to 12.

28. A communication device, comprising: a processor and a memory; wherein the memory is configured to store a computer program, and the processor is configured to call and run the computer program stored in the memory to enable the communication device to perform the method of any one of claims 13 to 24.

29. A chip, comprising: a processor, configured to call and run a computer program from a memory to enable a device installed with the chip to perform the method of any one of claims 1 to 12.

30. A chip, comprising: a processor, configured to call and run a computer program from a memory to enable a device installed with the chip to perform the method of any one of claims 13 to 24.

31. A computer-readable storage medium, configured to store a computer program that, when being executed, implements the method of any one of claims 1 to 12.

32. A computer-readable storage medium, configured to store a computer program that, when being executed, implements the method of any one of claims 13 to 24.

33. A computer program product, comprising a computer program instruction that, when being executed, implements the method of any one of claims 1 to 12.

34. A computer program product, comprising a computer program instruction that, when being executed, implements the method of any one of claims 13 to 24.

**35.** A computer program, implementing the method of any one of claims 1 to 12 when being executed.

**36.** A computer program, implementing the method of any one of claims 13 to 24 when being executed.

**100**

FIG. 1

FIG. 2

WUR PPDU

| Legacy preamble | WUR-Sync | WUR-Data |

20MHz preamble, OFDM modulation          4MHz WUR part

# FIG. 3

WUR- Sync sequence

On

Off

Bit
「 1 」

Bit
「 0 」

Window

Analog and
Radio Frequency

# FIG. 4

Information
bits

WUR
encoder

On

Off

Bit
「 1 」

Bit
「 0 」

Window

Analog and
Radio Frequency

# FIG. 5

MC-OOK
symbol '1'

MC-OOK
symbol '0'

**FIG. 6**

Power supply/trigger

Back scattering

Network
device

Zero-power
terminal

Power
harvesting
module

back
scattering
module

low-power
computing
module

Sensor
module

**FIG. 7**

**FIG. 8**

**FIG. 9**

**FIG. 10**

**200**

First communication device

Second communication device

S210, the second communication device transmits a carrier signal generated based on multi-carrier modulation; wherein the carrier signal is used for power supply to the first communication device, and/or the carrier signal is used for the first communication device to generate a backscatter signal by modulation

S220, the first communication device receives the carrier signal

**FIG. 11**

FIG. 12

Pattern **1**                    Pattern **2**

FIG. 13

**FIG. 14**

**FIG. 15**

Symbol
length

**FIG. 16**

1  0  1  0  1  0  1  1  1  0  1  0  1  0  1  1

**FIG. 17**

Subcarrier

Subcarrier 11

⋮

Subcarrier 1
Subcarrier 0

Carrier signal

Backscatter
signal

**FIG. 18**

Subcarrier

Subcarrier 11

⋮

Subcarrier 0

Carrier signal

Backscatter
signal

**FIG. 19**

Communication device 300

Communication unit 310

**FIG. 20**

Communication device 400

Communication unit 410

**FIG. 21**

Communication device 500

Memory
520

Processor
510

Transceiver
530

**FIG. 22**

Apparatus 600

Input interface 630

Processor 610

Memory 620

Output interface 640

**FIG. 23**

Communication system 700

First communication device

710

Second communication device

720

**FIG. 24**

## INTERNATIONAL SEARCH REPORT

| International application No. |
| --- |
| **PCT/CN2022/115208** |

### A.    CLASSIFICATION OF SUBJECT MATTER

H04L27/26(2006.01)i

According to International Patent Classification (IPC) or to both national classification and IPC

### B.    FIELDS SEARCHED

Minimum documentation searched (classification system followed by classification symbols)

IPC: HO4W H04L HO4B

Documentation searched other than minimum documentation to the extent that such documents are included in the fields searched

Electronic data base consulted during the international search (name of data base and, where practicable, search terms used)

CNTXT, ENTXT, WPI, 3GPP: 背向, 反向, 散射, 调制, 多, 载波, 子载波, 零功耗, 供电, 供能, 射频标签, back scattering, Zero power, OFDM, multi, carrier, supply, RFID

### C.    DOCUMENTS CONSIDERED TO BE RELEVANT

| Category* | Citation of document, with indication, where appropriate, of the relevant passages | Relevant to claim No. |
| --- | --- | --- |
| X | CN 106506426 A (UNIVERSITY OF ELECTRONIC SCIENCE AND TECHNOLOGY OF CHINA) 15 March 2017 (2017-03-15) <br> description, paragraphs [0006]-[0019] | 1-36 |
| X | CN 113810069 A (HUAWEI TECHNOLOGIES CO., LTD.) 17 December 2021 (2021-12-17) <br> description, paragraphs [0143]-[0185] | 1-36 |
| A | CN 111132342 A (CHONGQING UNIVERSITY OF POSTS AND TELECOMMUNICATIONS) 08 May 2020 (2020-05-08) <br> entire document | 1-36 |
| A | CN 111342855 A (FUDAN UNIVERSITY) 26 June 2020 (2020-06-26) <br> entire document | 1-36 |
| A | WO 2021163480 A1 (THE REGENTS OF THE UNIVERSITY OF CALIFORNIA) 19 August 2021 (2021-08-19) <br> entire document | 1-36 |
| A | OPPO. "RWS-210041: General view on Rel18 package from OPPO" <br> *3GPP TSG RAN*, 07 June 2021 (2021-06-07), <br> entire document | 1-36 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 May 2023** | **18 May 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/115208**

| Patent document cited in search report | | | Publication date (day/month/year) | Patent family member(s) | | | Publication date (day/month/year) |
|---|---|---|---|---|---|---|---|
| CN | 106506426 | A | 15 March 2017 | None | | | |
| CN | 113810069 | A | 17 December 2021 | WO | 2021254183 | A1 | 23 December 2021 |
| CN | 111132342 | A | 08 May 2020 | US | 2022407592 | A1 | 22 December 2022 |
| | | | | WO | 2021128608 | A1 | 01 July 2021 |
| CN | 111342855 | A | 26 June 2020 | None | | | |
| WO | 2021163480 | A1 | 19 August 2021 | US | 2023119392 | A1 | 20 April 2023 |

Form PCT/ISA/210 (patent family annex) (July 2022)